Europäisches Patentamt

European Patent Office

Office européen des brevets

(11) Publication number: **0 366 626**
**A1**

## (12) EUROPEAN PATENT APPLICATION

(21) Application number: **89830465.4**

(22) Date of filing: **25.10.89**

(51) Int. Cl.⁵: **A01K 1/03**

(30) Priority: **26.10.88 IT 2206988 U**

(43) Date of publication of application:
**02.05.90 Bulletin 90/18**

(84) Designated Contracting States:
**AT BE CH DE ES FR GB GR LI NL SE**

(71) Applicant: **Suman, Paolo**
**Viale Gavazzi, 1**
**I-20066 Melzo (Milano)(IT)**

Applicant: **Suman, Adriano**
**Viale Gavazzi, 1**
**I-20066 Melzo (Milano)(IT)**

(72) Inventor: **Suman, Paolo**
**Viale Gavazzi, 1**
**I-20066 Melzo (Milano)(IT)**
Inventor: **Suman, Adriano**
**Viale Gavazzi, 1**
**I-20066 Melzo (Milano)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Portable folding shelter for domestic animals.**

(57) The shelter (1) comprises a pair of sidewalls (2, 3) articulated,at the top edges thereof,to a respective sloping element (10, 11) in turn articulated to a central (13) element,a rear (20) and a front apertured wall (21) articulated to the side edges of the sidewalls (2, 3) and each foldable along a middle vertical line,the roof of the shelter (1) being provided with a withdrawing holding handle (14).

FIG. 1

# PORTABLE FOLDING SHELTER FOR DOMESTIC ANIMALS

## BACKGROUND OP THE INVENTION

The present invention relates to a portable and folding shelter for domestic animals.

As is known,domestic shelters for domestic animals,the so-called "dog's beds" consist generally of a fixed element structure which comprises a bottom panel,encompassed by rigid sidewalls and closed at the top by a roof member including sloping panels.

These conventional shelters can not be easily handled and trasnported,since they have a comparatively large size.

## SUMMARY OF THE INVENTION

The aim of the present invention is to overcome the above mentioned drawback by providing a portable folding shelter structure for domestic animals,which has,in its stored condition,a very small size,so sa to greatly facilitate its shipment and/or transportation.

Within the scope of the above mentioned aim, a main object of the present invention is to provide such a domestic animals shelter which can be made starting from conventional elements and material used for making dog's beds,and which moreover,has a very reduced making cost.

Another object of the present invention is to provide such an animal shelter,which can be easily switched from the erected to the dismantled or folded position.

According to one aspect of the present invention,the above mentioned task and objects,as well as yet other objects,which will become more apparent hereinafter,are achieved by a portable folding shelter for domestic animals,characterized in that said shelter comprises a pair of sidewalls articulated,at the top edges thereof,to a respective sloping element in turn articulated to a central element,said shelter further including a rear wall and a front wall having an opening,said rear and front wall being articulated with respect to the side edges of said sidewalls and each foldable along a middle vertical line.

## BRIEF DESCRIPTION OF THE DRAWINGS

Further characteristics and advantages of the present invention will become more apparent from the following detailed description of a preferred, though not exclusive embodiment,thereof which is illustrated,by way of an indicative but not limitative example in the figures of the accompanying drawings,in which :

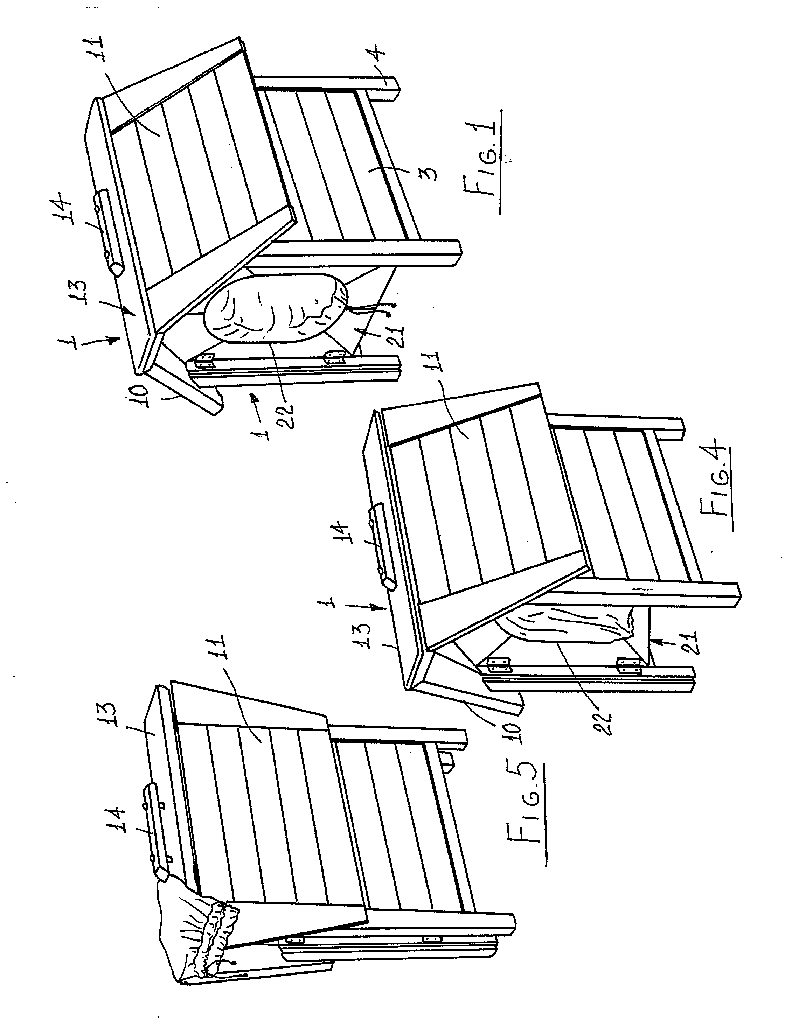

figure 1 is a front perspective view showing the shelter according to the present invention in its use position;

figure 2 is a rear perspective view showing the shelter according to the present invention in its use position;

figure 3 is a front view of the subject shelter as it is folded down;

figure 4 is a side view of the subject shelter as it is folded down; and

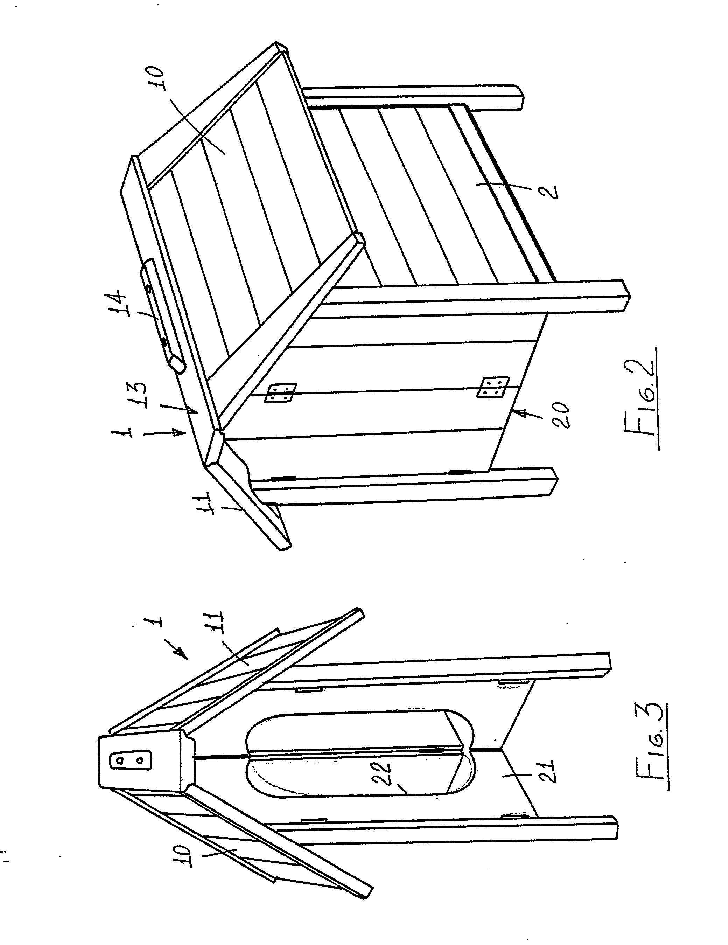

figure 5 shows the shelter in a completely folded down condition.

## DESCRIPTION OF THE PREFERRED EMBODIMENT

With reference to the figures of the accompanying drawings,the portable folding shelter according to the present invention,which has been indicated overally at the reference number 1,comprises a pair of sidewalls 2 and 3 provided with resting feet 4,arranged as an extension of the shelter vertical uprights.

The sidewalls 2 and 3 are respectively articulated,at their top edges,to two sloping elements 10 and 11 which,at their opposite top edges,are articulated to a central element 13 operating as a roof element and is provided with a withdrawing holding handle 14.

There are moreover provided a rear wall 20 and a front wall 21,provided with an inlet opening 22,which are articulated,at their vertical edges,to the vertical edges of the sidewalls 2 and 3.

In this connection it should be pointed out that both the front and rear wall are split into two articulated portions,along their middle central axis, so as to be foldable inward to be stored between the the adjoining sidewalls brought together.

The thus constructed shelter can also be provided with a bottom consisting preferably of a cloth member,as suitably stretched,or of a rigid panel articulated to a bottom edge portion of a sidewall and abutting against an abutment member projecting on the opposite sidewall.

Thus,the bottom will form,in the latter case, a stiffening element to properly hold the shelter in its erected position.

In order to fold down the shelter, the bottom must be firstly tilted down so as to arrange it against the sidewall thereto it is articulated, and then further fold down the structure by bringing the sidewall together, so as to cause the rear and front wall to collapse and the roof elements to raise.

At the front opening an exchangeable and easily washable bag member can be also provided to close said front opening.

Preferably all of the shelter parts are made of wood material so as to provide a structure having a good strength against weather agents.

From the above disclosure it should be apparent that the disclosed shelter fully achieves the intended aim and objects.

While the invention has been disclosed and illustrated with reference to a preferred embodiment thereof, it should be apparent that the disclosed embodiment is susceptible to several modifications and variations all of which will come within the spirit and scope of the accompanying claims.

## Claims

1- A portable folding shelter for domestic animals characterized in that said shelter comprises a pair of sidewalls articulated, at the top edges thereof, to a respective sloping element in turn erticulated to a central element, said shelter further including a rear wall and a front wall having an opening, said rear and front walls being articulated with respect to the side edges of said sidewalls and each foldable along a middle vertical line.

2- A shelter according to claim 1, characterized in that the central element of the roof of said shelter is provided with a withdrawing handle.

3- A shelter according to claims 1 and 2, characterized in that said shelter comprises a substantially rigid bottom element articulated to the bottom edge portion of a sidewall and abutting against an abutment member provided on the opposite sidewall, said bottom being adapted to be tilted against the inner surface of the sidewall to which said bottom is articulated.

4- A shelter according to any preceding claims, characterized in that said sidewalls are provided with bearing feet.

5- A shelter according to any preceding claims, characterized in that said shelter further comprises a bag element arranged at the front opening thereof.

Fig.5

Fig.4

Fig.1

EP 0 366 626 A1

FIG. 3

FIG. 2

EP 0 366 626 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4603658 (GARNSEY) <br> * the whole document * | 1 | A01K1/03 |
| A | | 3 | |
| | --- | | |
| A | US-A-3324831 (ST. ONGE) <br> * column 3, lines 7 - 14; figures 1-3 * | 1, 2 | |
| | --- | | |
| A | US-A-4195593 (DUNN) <br> * column 2, lines 38 - 44; figures 1-5 * | 1, 3 | |
| | --- | | |
| A | GB-A-205541 (GAMON) <br> * page 1, lines 84 - 87; figure 2 * | 4 | |
| | --- | | |
| A | US-A-4352340 (STRUBELT) <br> * abstract; figure 2 * | 5 | |
| | --- | | |
| A | US-A-4109427 (O'BRIAN) | | |
| | ----- | | |

TECHNICAL FIELDS SEARCHED (Int. Cl.5 )

A01K

The present search report has been drawn up for all claims

| Place of search | Date of completion of the search | Examiner |
|---|---|---|
| THE HAGUE | 24 JANUARY 1990 | VON ARX V.U. |